# EUROPÄISCHE PATENTSCHRIFT

(11) **EP 2 906 820 B1**
(45) Veröffentlichungstag und Bekanntmachung des Hinweises auf die Patenterteilung: **07.12.2016**
(21) Anmeldenummer: 13776997.2
(22) Anmeldetag: 08.10.2013
(51) Int. Cl.: F03D 3/02, F03D 3/04

(54) **TURBINENSYSTEM FÜR WINDKRAFT MIT ZWEI RADIALTURBINEN UND EINEM VERÄNDERLICHEN NASENFÖRMIGEN WINDVERTEILER**
TURBINE SYSTEM FOR WIND POWER WITH TWO RADIAL TURBINES AND A VARIABLE NOSE-SHAPED WIND DISTRIBUTOR
SYSTÈME DE TURBINES POUR ÉOLIENNES COMPRENANT DEUX TURBINES RADIALES ET UN ÉLÉMENT RÉPARTITEUR DE VENT VARIABLE EN FORME DE NEZ

(30) Priorität: 10.10.2012 DE 102012019874; 28.02.2013 DE 102013101977
(43) Veröffentlichungstag der Anmeldung: 19.08.2015
(73) Patentinhaber: Steel, Dennis Patrick, 47441 Moers (DE)
(72) Erfinder: Steel, Dennis Patrick, 47441 Moers (DE)
(74) Vertreter: Schoenen, Norbert
(86) Internationale Anmeldenummer: PCT/EP2013/070898
(87) Internationale Veröffentlichungsnummer: WO 2014/056881

(56) Entgegenhaltungen:
- WO-A2-2012/038043
- US-A- 4 156 580
- US-A1- 2004 141 845
- US-A1- 2009 184 521

## Beschreibung

Die Erfindung betrifft ein Turbinensystem für Windkraft mit zwei Radialturbinen (1, 2), die einen um eine vertikale Achse drehbaren Rotor aufweisen, welcher einen oder mehrere Turbinenflügel (25) umfasst, wobei die Turbinenflügel (25) parallel zur Rotorachse ausgerichtet sind, wobei ein V-förmiger und parallel zu den Rotorachsen ausgerichteter Windverteiler (3, 305) vorgesehen ist.

### Stand der Technik

Ein Turbinensystem der eingangs genannten Art ist beispielsweise aus der internationalen Patentanmeldung WO 2012/038 043 A2 des Anmelders bekannt. Das Turbinensystem dreht sich selbsttätig und ohne externen Antrieb bereits bei Windgeschwindigkeiten ab 1 m/s in die Windrichtung.

Hier werden zur Effizienzverstärkung zwei Turbinen-Leitblech-Systeme als Windverteiler-System spiegelbildlich zusammengeführt, so dass zum Beispiel bei senkrechter Drehachse und Blick in die Hauptwindrichtung das linke Leitblech den Wind zur linken Turbine und das rechte Leitblech den Wind zu rechten Turbine ableitet. Dabei können nach diesem Dokument die Leitbleche zu einem geschlossenen Windführungssystem, dem Windverteiler, in Form einer "Nase" mit abgerundeten "Nasenrücken" als Verbindung der beiden Leitbleche vorteilhaft ausgebildet sein. Dadurch wird ein V-förmiger Windverteiler erhalten.

Weiterhin wird in dem Dokument vorgeschlagen, dass der Abstand des V-förmigen Windverteilers zu den Turbinen variabel und verstellbar ist, um für alle Windverhältnisse optimale Betriebsbedingungen zu erreichen. Der V-förmige Windverteiler wird je nach Windgeschwindigkeit in die optimale Stellung, bezogen auf Abstand und Neigung zu den Turbinenblättern und der Turbinenachse, gebracht.

Nähere Einzelheiten zu der Verstellbarkeit des V-förmigen Windverteilers sind hier allerdings nicht offenbart.

Ein Vorteil der Savonius-Turbinen ist deren Robustheit, so dass sie auch hohen Windgeschwindigkeiten standhalten können. Die Turbinen rotieren dann sehr schnell, ohne zerstört zu werden. Aber die angeschlossenen Generatoren sind für solche hohen Drehzahlen nicht ausgelegt.

Eine Drehzahlbegrenzung ist daher notwendig. Nahe liegend ist es daher, bei zu hohen Windgeschwindigkeiten die Turbinen abzuschalten oder Bremsen einzusetzen, die nach dem Reibungsprinzip arbeiten. Ein Nachteil liegt jedoch in dem Verlust der Windenergie, die entweder überhaupt nicht mehr nutzbar ist oder zum Teil nutzlos in Reibungswärme umgewandelt wird.

Beim Turbinensystem der eingangs genannten Art tritt ein weiteres Problem auf. Bei niedrigen Windgeschwindigkeiten strömt der Wind am Windverteiler und an den Turbinen vorbei und um die Turbinen herum wieder zurück (Magnus-Effekt). Dadurch wird der Wirkungsgrad bei niedrigen Windgeschwindigkeiten verringert. Bei hohen Windgeschwindigkeiten tritt dieser Effekt nicht auf. Hier reißt die Windströmung an den Rotoren ab und wird nicht nach innen und zurück umgelenkt.

### Aufgabe und Lösung der Erfindung

Aufgabe der Erfindung: Ausgehend von dem bekannten Turbinensystem stellte sich das Problem, einen Schutz der Generatoren vor zu hohen Drehzahlen bei hohen Windgeschwindigkeiten zu erreichen, ohne dass die geerntete Windenergie nutzlos in Wärme umgewandelt wird. Zudem soll der Nachteil der Reibungsbremsen vermieden werden, dass die verschlissenen Bremsbeläge ausgetauscht werden müssen. Schließlich soll das Bremssystem bei stürmischen Windverhältnissen auf keinen Fall ausfallen, wie es bei hydraulischen oder Reibungs-Bremsen der Fall sein kann.

Außerdem und vor allem soll der oben beschriebene Effekt bei niedrigen Windgeschwindigkeiten vermieden werden, dass die Windströmung nicht abreißt, sondern nach innen und zurück umgelenkt wird und somit den Wirkungsgrad vermindert.

Diese Aufgabe wird bei einem Turbinensystem für Windkraft mit zwei Radialturbinen und einem veränderlichen nasenförmigen Windverteiler der eingangs genannten Art erfindungsgemäß dadurch gelöst, dass der V-förmige Windverteiler (3, 305) einen unterhalb einer vorgegebenen Windgeschwindigkeit geöffneten und oberhalb der vorgegebenen Windgeschwindigkeit geschlossenen Winddurchlass aufweist.

Insbesondere weist der V-förmige Windverteiler (3, 305) zwei Flügel auf, zwischen denen der Winddurchlass angeordnet ist.

Vorgeschlagen wird außerdem, dass ein Spalt zwischen den Flügeln vorgesehen ist und dass der Spalt unterhalb der vorgegebenen Windgeschwindigkeit geöffnet und oberhalb der vorgegebenen Windgeschwindigkeit geschlossen ist.

Bei niedrigen Windgeschwindigkeiten wird zwar der Hauptteil der Windströmung auf die Turbinen geleitet, aber ein Teil der Strömung fließt zwischen den beiden zwillingsartig nebeneinander angeordneten Radialturbinen vorbei und sorgt für den Abriss des auf die Turbinen gerichteten Strömungsanteils. Eine nachteilige Rückströmung wird auf diese Weise vermieden. Andererseits, wenn die Windgeschwindigkeit zunimmt, schließt sich dieser Winddurchlass und die gesamte Windströmung wird auf die Radialturbinen gerichtet. Wegen der hohen Windgeschwindigkeit tritt dann keine Rückströmung auf, sondern die Strömung reißt problemlos an den Radialturbinen ab. Diese Anordnung wurde in einer Vielzahl von praktischen Tests geprüft. Dabei stellte sich heraus, dass bis zu 70 % der einfallenden Windenergie in kinetische Energie umgesetzt werden kann.

Der Winddurchlass selber kann unterschiedlich ausgestaltet sein. Wichtig ist nur, dass der Spalt bei niedrigen Windgeschwindigkeiten geöffnet und bei hohen Windgeschwindigkeiten, also oberhalb einer vorgegebenen Windgeschwindigkeit geschlossen ist.

Eine reibungsfreie Bremseinrichtung wird vorzugsweise dadurch erreicht, dass zur Regulierung und Abbremsung der Turbinendrehzahl bei unterschiedlichen Windgeschwindigkeiten die vom Windverteiler (3, 305) abgeschattete Fläche der Radialturbinen (1, 2) veränderbar ist. Ein veränderlicher Anteil der wirksamen Fläche der Radialturbinen soll also im "Windschatten" des Windverteilers liegen.

Erfindungsgemäß erfüllt der Windverteiler mindestens drei Funktionen. Bei starkem Wind führt er die gesamte Windenergie auf die Rotoren der beiden Turbinen. Bei schwachem Wind ermöglicht er eine Windströmung zwischen den Rotoren hindurch, um künstlich einen Abriss der Windströmung von den Rotoren zu erreichen. Drittens dient der Windverteiler als eine reibungsfreie Bremseinheit, wenn er die Radialturbinen ausreichend stark und insbesondere vollständig abschattet.

Erfindungsgemäß kann der Windverteiler für unterschiedliche Windgeschwindigkeiten verstellt werden, um für alle Windverhältnisse optimale Betriebsbedingungen zu erreichen. Dabei ist das Turbinensystem auch bei niedrigen Windgeschwindigkeiten selbststartend, die Schnelllaufzahl (englisch: tip speed ratio = TSR) möglichst hoch und vorzugsweise größer als 3, auch bei unterschiedlichen Windgeschwindigkeiten. Der Wirkungsgrad ist ebenfalls sehr hoch.

Weiterhin wird vorgeschlagen, dass die zwei nebeneinander und parallel ausgerichteten Radialturbinen (1, 2) miteinander verbunden und um eine Schwenkachse (15) parallel zu den Turbinenachsen (18) verschwenkbar sind, wobei die Schwenkachse und der V-förmige Windverteiler (3) außerhalb der Verbindungslinie der Turbinenachsen und beide auf der gleichen Seite der Verbindungslinie liegen. Dadurch kann sich das erfindungsgemäße System; welches auf einem Mast gelagert ist, eigenständig in den Wind drehen und somit immer optimal vom Wind angeströmt werden. Das "In den Wind drehen" ist bei mehreren konkreten Modellen im freien Wind nachgewiesen worden.

Weitere vorteilhafte Ausgestaltungen der Erfindung sind in den Unteransprüchen angeführt.

### Ausführungsbeispiele

Im Folgenden werden mehrere Ausführungsbeispiele der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: eine perspektivische Darstellung der Windkraftanlage mit zwei Radialturbinen nach dem Stand der Technik der WO 2012/038 043 A2 des Anmelders,
- Figur 2: die konstruktiven Details eines Ausführungsbeispiels nach der WO 2012/038 043 A2 als Rohrmast-Aufhängungssystem in einer Ansicht von der Seite entsprechend A-A in Figur 3,
- Figur 3: eine Aufsicht auf die Windkraftanlage nach Figur 2,
- Figur 4: den Fadentest,
- Figuren 5 und 6: eine weiter verbesserte Windkraftanlage nach der WO 2012/038 043 A2 in verschiedenen perspektivischen Ansichten,
- Figur 7: eine Gittermastkonstruktion nach der WO 2012/038 043 A2, die als Gerüst für das spezielle Akkumulatoren- und Turbinen-Aufhängungssystem genutzt wird und/oder werden kann,
- Figur 8: den Schnitt A-A nach Figur 7,
- Figur 13: eine schematische Darstellung einer Ansicht von der Seite auf eine Savonius-Turbine nach dem Stand der Technik,
- Figur 14: eine Darstellung entsprechend Figur 13, aber für das erfindungsgemäße Turbinensystem,
- Figur 15: eine Draufsicht auf das erfindungsgemäße Turbinensystem bei entferntem oberen Abschlussblech mit einer verbesserten Ausführung des Windverteilers, hier in einer Einstellung für hohe Windgeschwindigkeiten,
- Figur 16: eine Darstellung entsprechend Figur 15, aber mit einer Einstellung des Windverteilers für niedrige Windgeschwindigkeiten und
- Figur 17: eine Darstellung entsprechend den Figuren 15 und 16, aber mit einer Einstellung des Windverteilers als reibungsfreies Bremssystem.

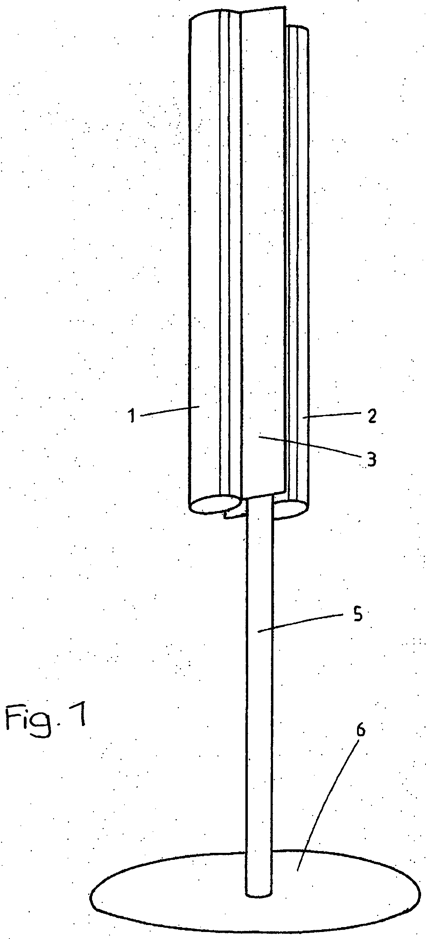

Figur 1 zeigt eine perspektivische Darstellung der Windkraftanlage mit zwei Radialturbinen 1, 2 und einem V-förmigen Windverteiler 3, wobei Radialturbinen und Windverteiler als Ganzes um eine vertikale Achse drehbar (schwenkbar) an einem Stahlmast 5 oder einem anderen Fundament 6 angebracht sind.

Vorzugsweise ist der Abstand des V-förmigen Windverteilers zu den Turbinen variabel und verstellbar, um für alle Windverhältnisse optimale Betriebsbedingungen zu erreichen.

Der V-förmige Windverteiler wird je nach Windgeschwindigkeit in die optimale Stellung, bezogen auf Abstand und Neigung zu den Turbinenblättern und der Turbinenachse, gebracht.

Bei einer Gesamthöhe von 20 m beträgt die Höhe der Turbinen 10 m. Die Turbinen haben einen Durchmesser von 1 m. Die erwartete Kapazität bei einem Küstenstandort, wo die Windkraftanlage den zirkulierenden Küstenwind auffängt, beträgt ca. 21700 kWh, jährlich gemittelt mit einem Wirkungsgrad von 38 %.

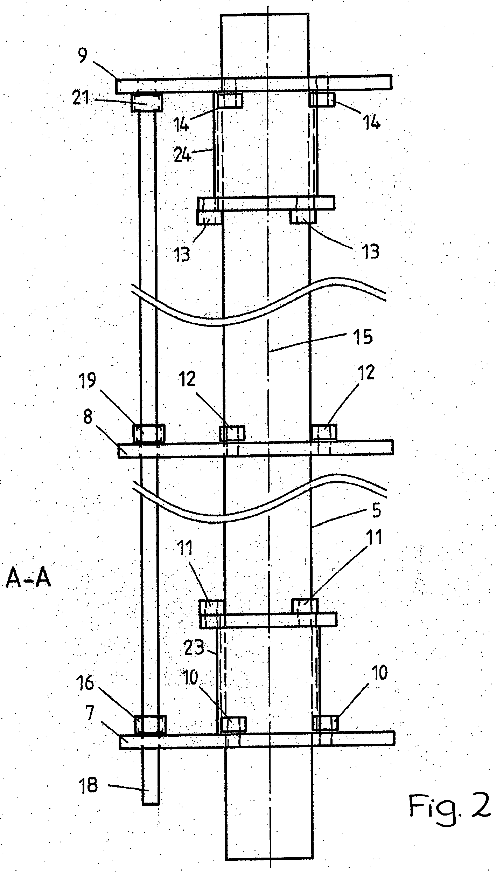

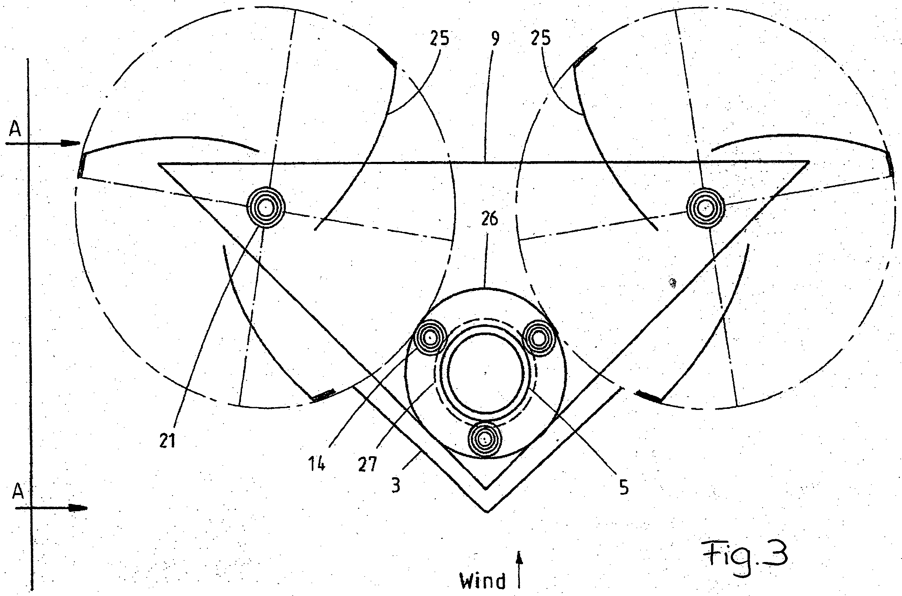

Figur 2 zeigt die konstruktiven Details eines Ausführungsbeispiels als Rohrmast-Aufhängungssystem in einer Ansicht von der Seite entsprechend A-A in Figur 3. An dem 20 m hohen Stahlmast 5 sind drei Trägerplatten 7, 8, 9 mittels Lager 10, 11, 12, 13, 14 drehbar um die Längsachse 15 des Stahlmastes 5 angebracht. Die untere Trägerplatte 7 hat drei Drehlager 10 am Stahlmast 5 und zwei Turbinenlager 16, 17 an der Turbinenachse 18. Die mittlere Trägerplatte 8 hat drei Drehlager 12 und zwei Turbinenlager 19, 20 und die obere Trägerplatte 9 hat drei Drehlager 14 und zwei Turbinenlager 21, 22. Die Turbinenlager 17, 20 und 22 sind in Figur 2 nicht dargestellt und gehören zur anderen Turbine.

Die Drehlager 10, 11 einerseits und 13, 14 andererseits sind durch einen Distanzkragen 23, 24 auf Abstand gehalten. Der Distanzkragen ist ausgebildet als Hohlrohr.

Figur 3 zeigt schließlich eine Aufsicht auf die Windkraftanlagen. Erkennbar sind die Turbinenschaufeln 25. Eingezeichnet ist mit einem Pfeil auch die Windrichtung, wenn sich die Windkraftanlage erfindungsgemäß in den Wind gedreht hat, so dass die Spitze des V-förmigen Windverteilers 3 dem Wind entgegen zeigt.

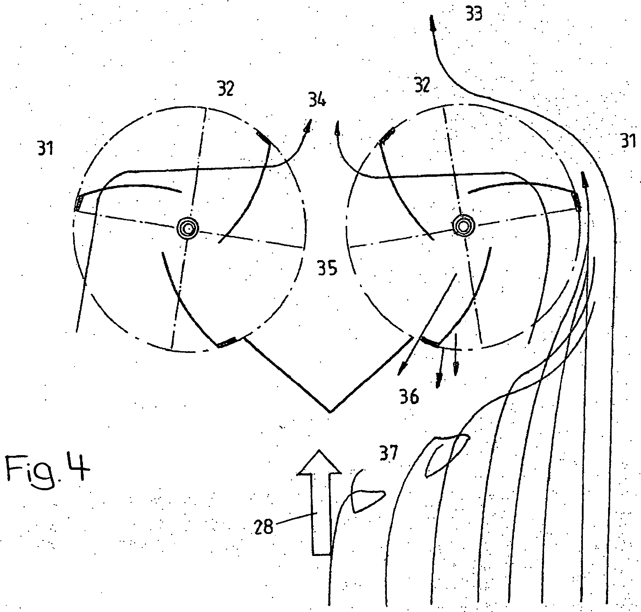

Mit der Anlage wurde ein so genannter Fadentest durchgeführt (Figur 4). Wind 28 bis 6 m/s blies gegen die Anlage. Das Verhältnis von der Umfangsgeschwindigkeit der Turbine zum Wind war bis zu 3 : 1. In Figur 4 ist der Abriss der Fadenrichtung (unten im Bild) deutlich erkennbar. Die Anlage kann Energie aus der Druckdifferenz oder der potentiellen Energie des Windes extrahieren, nicht bloß aus der kinetischen Energie der bewegten Luft.

Die Bedeutung der Bezugszahlen in Figur 4 geht aus der Bezugszeichenliste hervor.

Ein Nebeneffekt ist der Pingpong-Ball, der in einem schrägen Luftstrahl "häng": Durch den Coanda-Effekt löst die Strömung des Luftstrahles nicht vom Ball ab, sondern umrundet ihn (fast) völlig ohne Ablösung. Da der Ball leicht unterhalb des Zentrums des Luftstrahles hängt, erfolgt die Umströmung nicht symmetrisch. Es wird mehr Luft nach unten abgelenkt, da an der Unterseite des Balles die Strömungsgeschwindigkeit und der Strahlquerschnitt gegenüber der Oberseite geringer sind. Als Reaktion erfährt der Ball eine Kraft nach oben. Dies erfolgt in Überlagerung mit dem Magnus-Effekt (der Ball dreht sich). Beide Effekte, jeder für sich, lassen den Ball nicht nach unten fallen, sondern nur an der Unterseite des Luftstrahles entlang-"rutschen". Der Widerstand, den der Ball der Strömung entgegensetzt, hält ihn auf Distanz zur Düse und die Schwerkraft verhindert, dass er einfach weggeblasen wird. So kann der Ball in einer mehr oder weniger stabilen Position schweben.

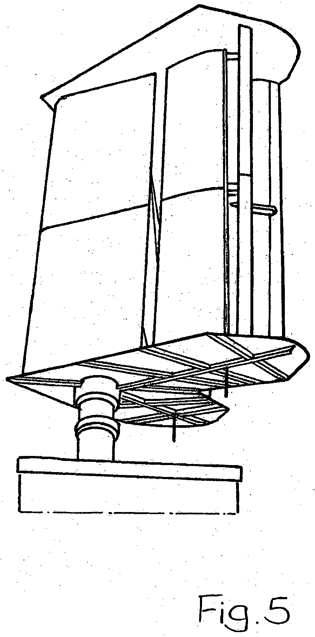

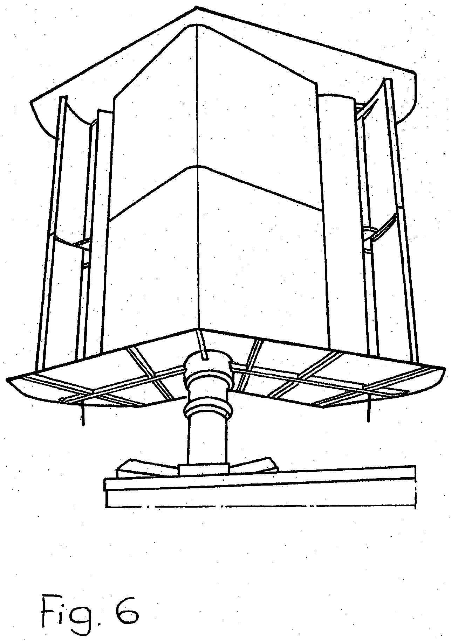

Die Figuren 5 und 6 zeigen eine weiter verbesserte Windkraftanlage in verschiedenen perspektivischen Ansichten. Der praktische Betrieb hat gezeigt, dass die Windkraftanlage praktisch geräuschlos und sehr vibrationsarm arbeitet. Etwaige Druckschwingungen liegen im unhörbaren Bereich unterhalb von 20 Hz. Der leichte und gut gewuchtete Aufbau der rotierenden Teile sorgt für die beobachtete Vibrationsarmut. Dadurch ist diese Windkraftanlage hervorragend im urbanen Bereich an und/oder auf Gebäuden einsetzbar.

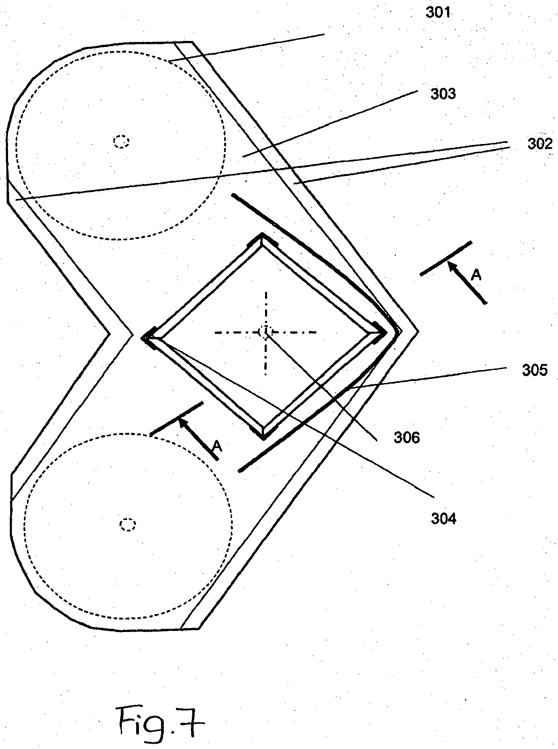

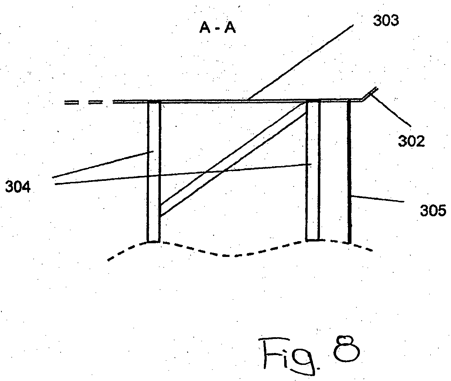

In einem weiteren Ausführungsbeispiel wird oberhalb der Drehverbindung, die auf einem feststehenden Mast befestigt ist, eine Gittermastkonstruktion vorgesehen, die als Gerüst für das spezielle Akkumulatoren- und Turbinen-Aufhängungssystem genutzt wird und/oder werden kann (vgl. Fig. 7 und Schnitt A-A als Figur 8). Der Hohlraum innerhalb des Gittermastes bietet genügend Platz für die sichere Aufstellung/Befestigung von Akkumulatoren und der Ladesteuerung; gleichzeitig können die Kabellängen zum Generator kurz gehalten werden, um Ohm'sche Verluste gering zu halten.

Da der Turm im unteren Bereich unterhalb der Drehverbindung aus Stahlrohr hergestellt ist, bildet er einen Hohlraum, der dazu genutzt werden kann, hochsensible Technik sicher zu installieren, da auch eine Belüftung und/oder Heizung und/oder geeignete Klimatisierung (air conditioning), besonders bezüglich der Luftfeuchtigkeit, vorgesehen sein kann.

Das Fundament kann in seiner Ausführung als weiterer Energiespeicher oder als Wasserreservoir oder als Ölspeicher genutzt und als solcher konzipiert werden. Im Fundament können Wärmepumpen (heat pumps with heat pipes) integriert werden.

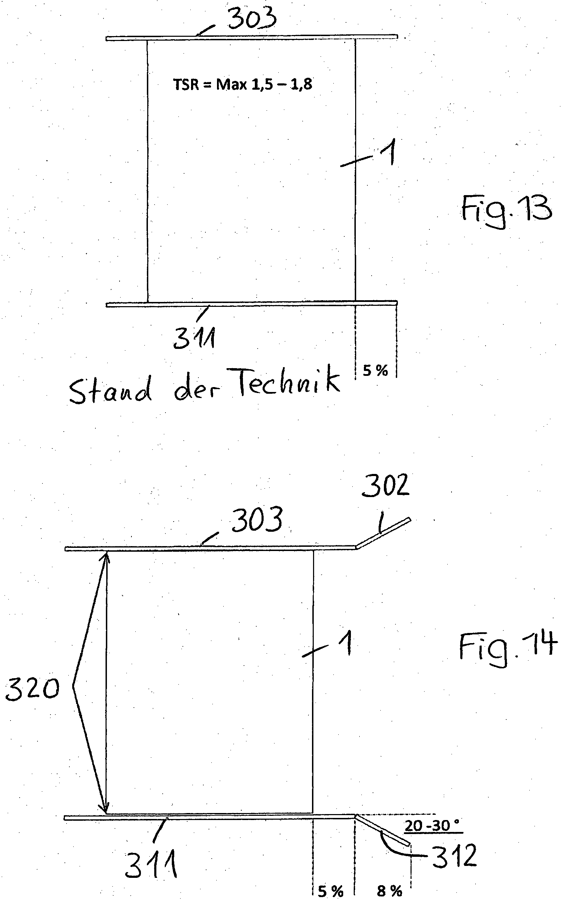

Im Folgenden werden die erfindungsgemäßen Verbesserungen des Turbinensystems anhand der Figuren 13 bis 17 näher erläutert.

Das Grundgerüst 310, welches sowohl die Turbinenlager als auch den Windverteiler trägt, ist aus Stahl hergestellt, um die notwendige Stabilität auch in Stürmen zu haben sowie um Vibrationen und Lärm, wie er bei Turbinensystemen nach dem Stand der Technik auftritt, erheblich zu verringern oder sogar völlig auszuschließen.

Die Abschlussbleche, die ebenfalls vom Grundgerüst 310 getragen werden, decken das Turbinensystem oben und unten ab und zwingen die Luft in die Radialturbinen 1 und 2 einzuströmen. Die Abschlussbleche sind etwa 5 % länger als der Durchmesser der Turbine, der in diesem Fall 1,5 m beträgt.

Damit die Turbine sich dreimal schneller als die Windgeschwindigkeit im Freilauf bewegt (rotiert), ist es erforderlich, dass die Abschlussbleche 303 und 311 an der dem Wind zugewandten Seite abgekantet sind, insbesondere um mindestens 20 bis 30 %.

Figur 13 zeigt eine Ansicht von der Seite auf eine Savonius-Turbine nach dem Stand der Technik, welche zwar Abschlussbleche 303, 311 aufweist, die aber nicht die Abkantungen 302, 312 haben. Die Abschlussbleche stehen zwar etwa 5 % über dem Turbinenquerschnitt über, wie aus Figur 13 deutlich hervorgeht, aber diese Turbine nach dem Stand der Technik, entwickelt im Jahre 1927 von Savonius, ist nicht immer selbststartend. Sie erreicht eine Schnelllaufzahl (TSR) von maximal 1,5 bis 1,8.

Dagegen ist das erfindungsgemäße Turbinensystem anders aufgebaut, wie in Figur 14 deutlich erkennbar ist. Zum einen arbeitet dieses Turbinensystem mit Abkantungen 302, 312, so dass die Abschlussbleche 303, 311 wie Konzentrationsbleche wirken, die den Wind konzentriert und gebündelt in die Radialturbine leiten. Damit kann 25 % und mehr des Turbinengewichtes eingespart werden. Dieses Turbinensystem ist in jedem Fall selbststartend und kann eine Schnelllaufzahl (TSR) von über 3 erreichen. Ein weiterer Unterschied liegt in dem Spalt 320 zwischen den Radialrotoren und den Abschlussblechen 303, 311. Die Konzentrationsbleche sind erfindungsgemäß nämlich feststehend und drehen sich nicht zusammen mit der Radialturbine. Auch hier stehen die Abschlussbleche um 5 % bezogen auf den Turbinendurchmesser über. Zusätzlich gibt es einen Überstand von 8 %, ebenfalls bezogen auf den Turbinendurchmesser, welcher mit einem Winkel von 20 bis 30 % abgekantet ist, nämlich beim unteren Abschlussblech 311 nach unten und beim oberen Abschlussblech 303 nach oben, wie deutlich aus Figur 14 hervorgeht.

Das Turbinensystem in der Ausführung nach Figur 14 erreicht etwa 3,5-mal größere Drehzahlen als die Ausführung nach Figur 13. Auch die erreichbaren Drehmomente sind größer. Als Folge ist die Leistungsausbeute erheblich größer.

Die Abschlussbleche in Figur 14 können außerdem erheblich dünner als im Stand der Technik nach Figur 13 sein. Das Konstruktionsgewicht und eventuelle mechanische Spannungen sind erheblich reduziert.

Weitere Vorteile sind die robuste Konstruktion, die nur geringe Anzahl von beweglichen Teilen (die dem Reibungsverschleiß unterliegen), die Möglichkeit zur Wartung oder Reparatur der Teile ohne Zuhilfenahme von Kränen, die Austauschmöglichkeit der Lager mit konventionellen Werkzeugen, die Verwendung von industriellen und genormten Teilen und Größen zur Kosteneinsparung und Minimierung der Wartungszeiten.

Weitere Vorteile liegen in dem nur geringen Wartungs- und Reparaturaufwand. So braucht das Turbinensystem nur einmal pro Jahr eine Wartungsinspektion. Die vier Lager in jeder Turbine müssen nur alle 10 bis 20 Jahre gewechselt werden, die beiden Generatorenlager sogar nur alle 20 Jahre. Die Lager in dem Schwenkachsensystem haben nur einen geringen Verschleiß mit nur geringen Austauschkosten. Die elektrischen Komponenten können zur Optimierung alle 10 Jahre ausgetauscht werden. Andere Verschleißarten außer Reibung oder Dehnung infolge von mechanischer Spannung treten nicht auf. Die Turbine vom Typ Savonius kann jede Windgeschwindigkeit und sogar Stürme ohne Schaden überstehen.

Sogar bei großen Dimensionen ist das erfindungsgemäße Turbinensystem selbststartend.

Infolge des hohen Drehmomentes kann die Turbine als Wasserpumpe eingesetzt werden.

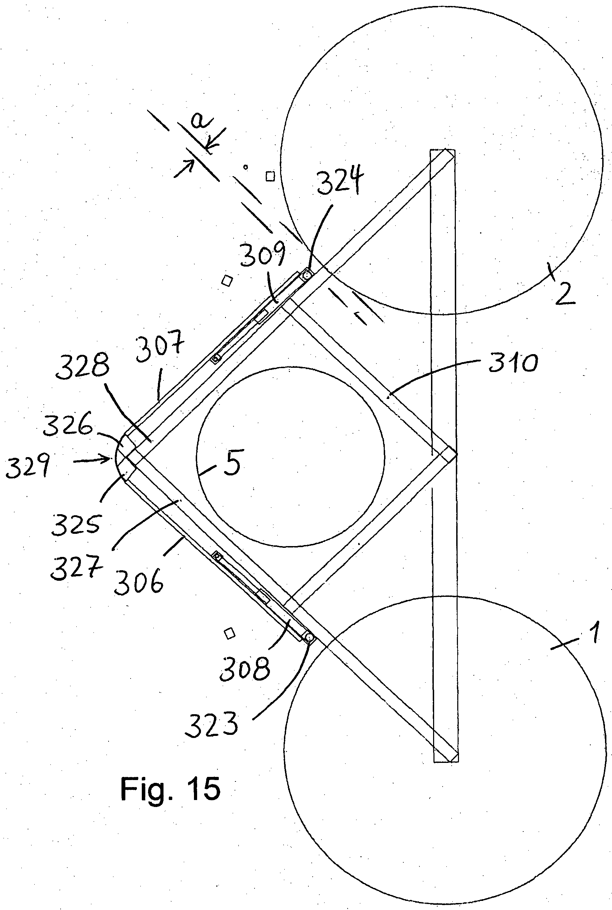

Die Figuren 15, 16 und 17 zeigen eine besonders vorteilhafte Ausführungsform der Erfindung. Die Darstellungen zeigen das Turbinensystem in schematischer Darstellung von oben. Der Stahlmast 5 befindet sich unterhalb des Grundgerüstes 310, welches als Gittermast ausgebildet ist. Strömungstechnisch spielen daher der Stahlmast 5 und der Gittermast 310 keine Rolle und sie beeinflussen die Strömungsverhältnisse nicht.

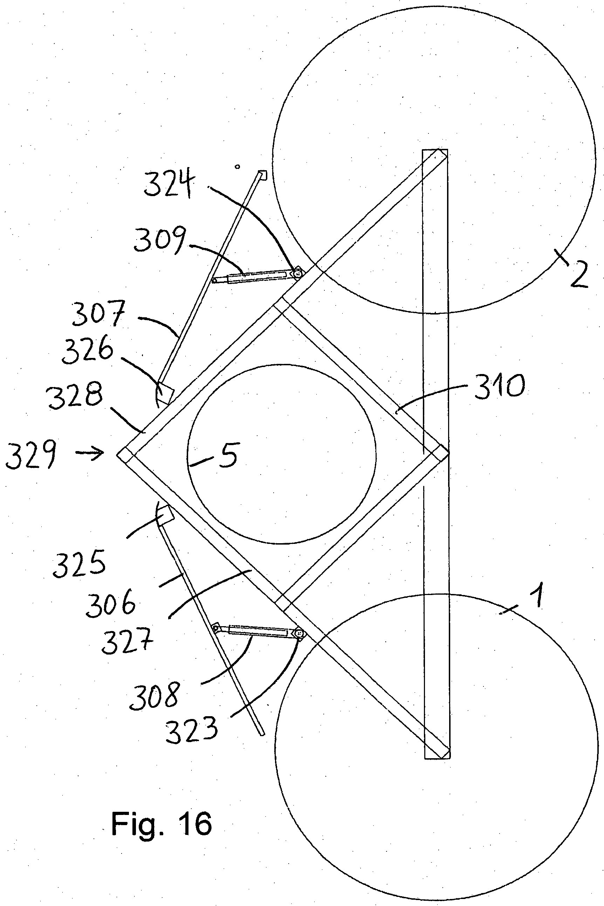

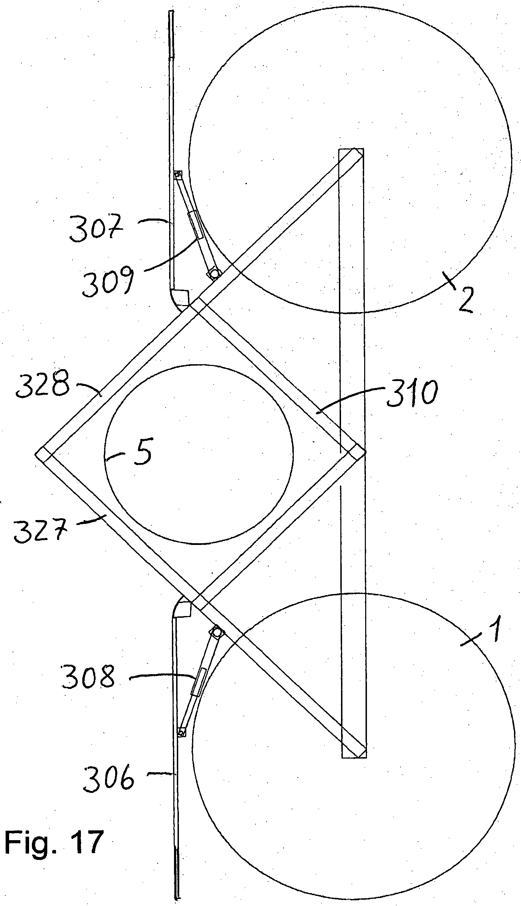

Die Flügel 306, 307 sind mittels Hydraulikzylinder 308, 309 verstellbar, wie auch die Figuren 16 und 17 zeigen. Dazu sind die Hydraulikzylinder 308, 309 an dem einen Ende drehbar um eine Achse 323, 324 mit einem Stellmotor an dem Gittermast 310 drehbar angebracht. Am anderen Ende sind die Hydraulikzylinder, ebenfalls drehbar, mit den Flügeln 306, 307 des Windverteilers verbunden. Die sich gegenüberliegenden Kanten 325, 326 laufen innerhalb der jeweiligen Schiene 327, 328 des Grundgerüstes 310 wie Nutensteine in einer Nut entlang der Schiene. Dies wird besonders deutlich in den Figuren 16 und 17.

Figur 15 zeigt die optimale Anordnung des Turbinensystems und der Flügel 307, 308 bei hohen Windgeschwindigkeiten, insbesondere in diesem Beispiel bei Geschwindigkeiten von mehr als 7 m/s. Dann ist der Spalt 329 zwischen den Flügeln 306, 307 geschlossen. Der Windverteiler führt die Windströmung entlang der Flügel 306, 307 auf die Turbinen. Dort reißt die Strömung bei der hohen Windgeschwindigkeit ab. Eine Rückströmung findet nicht statt. Die Rückströmung wird außerdem bei hohen Windgeschwindigkeiten dadurch verhindert, dass in diesem Fall durch den relativ engen Spalt bzw. Abstand a zwischen den Flügeln des Windverteilers und den Radialturbinen ein kleiner, aber ausreichender Anteil der Windströmung hindurchfließt und für ein zusätzliches Abreißen der Windströmung sorgt.

Typischerweise beträgt dieser Abstand a 90 mm bei einem Abstand der Radialturbinen 1, 2 von 3 m voneinander.

Figur 16 zeigt die Anordnung der Flügel 306, 307 des Windverteilers beim Turbinensystem für niedrige Windgeschwindigkeiten, im speziellen Fall für Windgeschwindigkeiten unterhalb von 7 m/s. Der Spalt 329 zwischen den Kanten 325, 326 der Flügel 306, 307 ist hier geöffnet, so dass der von links einströmende Wind nicht nur über die Flügel 306, 307 auf die Turbine gerichtet wird, sondern ein Teil durch den Spalt 329 zwischen die beiden Radialturbinen 1, 2 vorbeiströmt und zu einem Abriss der Windströmung außen an den Turbinen führt. Da der Stahlmast 5 unterhalb des Grundgerüstes (Gittermastes) angeordnet ist, kann der von links einfallende Wind ungehindert durch den Spalt 329 und zwischen den Radiälturbinen vorbeiströmen.

Die Anordnung des Turbinensystems in Figur 17 zeigt die Stellung der Flügel 306, 307 des Windverteilers in der Funktion als reibungsfreie Bremse. In dieser Stellung verhindern die Flügel 306, 307 das Einströmen des von links einfallenden Windes auf die Radialturbinen 1, 2. Die Flügel 306, 307 bilden gleichsam einen Windschutz für die Turbinen 1, 2.

### Bezugszeichenliste

(in Klammern stehen ggfs. die konkreten Bezeichnungen aus der Beschreibung des Ausführungsbeispiels)
- 1: Radialturbine
- 2: Radialturbine
- 3: Windverteiler
- 5: Stahlmast
- 6: Fundamentplatte
- 7: Trägerplatte
- 8: Trägerplatte
- 9: Trägerplatte
- 10: (Dreh-)Lager
- 11: (Dreh-)Lager
- 12: (Dreh-)Lager
- 13: (Dreh-)Lager
- 14: (Dreh-)Lager
- 15: Längsachse
- 16: Turbinen-Lager
- 18: Turbinenachse
- 19: Turbinen-Lager
- 21: Turbinen-Lager
- 23: Distanzkragen
- 24: Distanzkragen
- 25: Turbinenschaufeln
- 26: oberer Kragenflansch
- 27: Führungsflansch
- 28: Wind
- 31: Magnus-Effekt
- 32: Coanda-Effekt
- 33: Magnus-Coanda-Überlagerung
- 34: High Lift
- 35: Unterdruck
- 36: Überdruck
- 37: Fadenrichtung riss ab

- 301: Außenradius der Turbine bzw. der Turbinenflügel
- 302: Abkantung des oberen Konzentrations- und/oder Windführungsbleches 303
- 303: oberes Konzentrations- und/oder Windführungsblech, oberes Abschlussblech
- 304: Gittermast
- 305: V-förmiger Windverteiler
- 306: Flügel des Windverteilers
- 307: Flügel des Windverteilers
- 308: Hydraulikzylinder
- 309: Hydraulikzylinder
- 310: Grundgerüst, Gittermast
- 311: unteres Abschlussblech
- 312: Abkantung von 311
- 313: Blattfeder
- 314: Aluminiumplatte (Aluminiumblech)
- 315: Aluminiumplatte (Aluminiumblech)
- 316: Aluminiumplatte (Aluminiumblech)
- 317: Aluminiumplatte (Aluminiumblech)
- 318: Schienenanordnung (Nut und Feder)
- 319: Stellmotor
- 320: Spalt
- 321: Verstärkungsrippe
- 322: Verstärkungsrippe
- 323: Achse mit Stellmotor
- 324: Achse mit Stellmotor
- 325: Kante des Flügels 306
- 326: Kante des Flügels 307
- 327: Schiene
- 328: Schiene
- 329: Spalt (Winddurchlass)

- a: Abstand

## Patentansprüche

1. Turbinensystem für Windkraft mit mindestens zwei Rädialturbinen (1, 2), die einen um eine vertikale Achse drehbaren Rotor aufweisen, welcher einen oder mehrere Turbinenflügel (25) umfasst,
wobei die Turbinenflügel (25) parallel zur Rotorachse ausgerichtet sind,
wobei ein V-förmiger und parallel zu den Rotorachsen ausgerichteter Windverteiler (3, 305) vorgesehen ist,
**dadurch gekennzeichnet,**
**dass** der V-förmige Windverteiler (3, 305) einen unterhalb einer vorgegebenen Windgeschwindigkeit geöffneten und oberhalb der vorgegebenen Windgeschwindigkeit geschlossenen Winddurchlass (329) aufweist.

2. Turbinensystem nach Anspruch 1,
**dadurch gekennzeichnet,**
**dass** der V-förmige Windverteiler (3, 305) zwei Flügel (306, 307) aufweist, zwischen denen der Winddurchlass (329) angeordnet ist.

3. Turbinensystem nach Anspruch 2,
**dadurch gekennzeichnet,**
**dass** ein Spalt (329) zwischen den Flügeln vorgesehen ist und dass der Spalt unterhalb der vorgegebenen Windgeschwindigkeit geöffnet und oberhalb der vorgegebenen Windgeschwindigkeit geschlossen ist.

4. Turbinensystem nach Anspruch 1,
**dadurch gekennzeichnet,**
**dass** zur Regulierung und Abbremsung der Turbinendrehzahl bei unterschiedlichen Windgeschwindigkeiten die vom Windverteiler (3, 305) abgeschattete Fläche der Radialturbinen (1, 2) veränderbar ist.

5. Turbinensystem nach Anspruch 2,
**dadurch gekennzeichnet,**
**dass** die Flügel des Windverteilers die Radialturbinen vollständig abzuschatten in der Lage sind.

6. Turbinensystem nach Anspruch 1,
**dadurch gekennzeichnet,**
**dass** die zwei nebeneinander und parallel ausgerichteten Radialturbinen (1, 2) miteinander verbunden und um eine Schwenkachse (15) parallel zu den Turbinenachsen (18) verschwenkbar sind, wobei die Schwenkachse und der V-förmige Windverteiler (3) außerhalb der Verbindungslinie der Turbinenachsen und beide auf der gleichen Seite der Verbindungslinie liegen.

7. Turbinensystem nach Anspruch 2,
**dadurch gekennzeichnet,**
**dass** der Winkel zwischen den beiden Flügeln (306, 307) des V-förmigen Windverteilers (305) verstellbar ist und/oder
**dass** die Fläche der Flügel des V-förmigen Windverteilers verstellbar ist.

8. Turbinensystem nach Anspruch 2,
**dadurch gekennzeichnet,**
**dass** die Flügel über Hydraulikzylinder (308, 309) mit dem Grundgerüst (310) des Turbinensystems verbunden und die Hydraulikzylinder sowohl schwenkbar als auch ein- und ausfahrbar sind.

9. Turbinensystem nach Anspruch 1,
**dadurch gekennzeichnet,**
**dass** feststehende Abschlussbleche (303, 311) am oberen und unteren Ende des Turbinensystems vorgesehen und die Abschlussbleche im dem Wind zugewandten Vorderbereich, insbesondere um 20° bis 30°, zur Vergrößerung des Öffnungsquerschnitts des Turbinensystems abgekantet sind (302, 312), wobei die Abkantungen vorzugsweise nur an der dem Wind zugewandten Vorderbereich der Abschlussbleche vorgesehen sind.

10. Turbinensystem nach Anspruch 1,
**dadurch gekennzeichnet,**
**dass** feststehende Abschlussbleche (303, 311) am oberen und unteren Ende des Turbinensystems vorgesehen sind und die Abschlussbleche über den Rotorenquerschnitt überstehen, insbesondere um 5 %, bezogen auf den Rotorendurchmesser.

## Claims

1. Turbine system for wind power, comprising at least two radial flow turbines (1, 2) which have a rotor that can rotate about a vertical shaft and comprises one or more turbine blades (25), the turbine blades (25) being oriented in parallel with the rotor shaft, a V-shaped wind splitter (3, 305) being provided which is oriented in parallel with the rotor shafts, **characterised in that** the V-shaped wind splitter (3, 305) comprises a wind passage (329) which is open below a predefined wind speed and closed above the predefined wind speed.

2. Turbine system according to claim 1, **characterised in that** the V-shaped wind splitter (3, 305) comprises two blades (306, 307) between which the wind passage (329) is arranged.

3. Turbine system according to claim 2, **characterised in that** a gap (329) is provided between the blades, and **in that** the gap is open below the predefined wind speed and closed above the predefined wind speed.

4. Turbine system according to claim 1, **characterised in that**, in order to control and decelerate the rotational speed of the turbines at various wind speeds, the surface of the radial flow turbines (1, 2) which is obscured by the wind splitter (3, 305) can be modified.

5. Turbine system according to claim 2, **characterised in that** the blades of the wind splitter are able to obscure the radial flow turbines completely.

6. Turbine system according to claim 1, **characterised in that** the two radial flow turbines (1, 2), which are arranged next to one another and oriented in parallel, are interconnected and are pivotable about a pivot axis (15) in parallel with the turbine shafts (18), the pivot axis and the V-shaped wind splitter (3) being outside the line connecting the turbine shafts and both being on the same side of the connecting line.

7. Turbine system according to claim 2, **characterised in that** the angle between the two blades (306, 307) of the V-shaped wind splitter (305) is adjustable, and/or **in that** the surface of the blade of the V-shaped wind splitter is adjustable.

8. Turbine system according to claim 2, **characterised in that** the blades are connected to the main structure (310) of the turbine system by means of hydraulic cylinders (308, 309) and the hydraulic cylinders are pivotable as well as retractable and extendable.

9. Turbine system according to claim 1, **characterised in that** stationary end plates (303, 311) are provided on the upper and lower end of the turbine system and the end plates are chamfered (302, 312), in particular by from 20° to 30°, in the front region facing the wind, in order to increase the opening cross section of the turbine system, the chamfered regions being provided preferably only on the front region of the end plates that faces the wind.

10. Turbine system according to claim 1, **characterised in that** stationary end plates (303, 311) are provided on the upper and lower end of the turbine system and the end plates project over the rotor cross section, in particular by 5 %, based on the diameter of the rotors.

## Revendications

1. Système de turbines pour force éolienne avec au moins deux turbines radiales (1, 2) qui présentent un rotor rotatif autour d'un axe vertical, lequel comprend une ou plusieurs pales de turbine (25), dans lequel les pales de turbine (25) sont orientées parallèlement à l'axe de rotor, dans lequel un répartiteur de vent (3, 305) en forme de V et orienté parallèlement aux axes de rotor est prévu, **caractérisé en ce que** le répartiteur de vent (3, 305) en forme de V présente un passage pour vent (329) ouvert en dessous d'une vitesse de vent prédéfinie et fermé au-dessus de la vitesse de vent prédéfinie.

2. Système de turbines selon la revendication 1, **caractérisé en ce que** le répartiteur de vent (3, 305) en forme de V présente deux pales (306, 307) entre lesquelles est disposé le passage pour vent (329).

3. Système de turbines selon la revendication 2, **caractérisé en ce qu'**un espace (329) entre les pales est prévu et **en ce que** l'espace est ouvert en dessous de la vitesse de vent prédéfinie et fermé au-dessus de la vitesse de vent prédéfinie.

4. Système de turbines selon la revendication 1, **caractérisé en ce que** pour la régulation et le ralentissement du régime de turbines en présence de différentes vitesses de vent la surface des turbines radiales (1, 2) masquée par le répartiteur de vent (3, 305) est modifiable.

5. Système de turbines selon la revendication 2, **caractérisé en ce que** les pales du répartiteur de vent sont en mesure de masquer entièrement les turbines radiales.

6. Système de turbines selon la revendication 1, **caractérisé en ce que** les deux turbines radiales (1, 2) côte à côte et orientées parallèlement sont raccordées ensemble et peuvent pivoter autour d'un axe de pivotement (15) parallèle aux axes de turbine (18), dans lequel l'axe de pivotement et le répartiteur de vent (3) en forme de V se trouvent à l'extérieur de la ligne de raccordement des axes de turbine et tous deux se trouvent du même côté de la ligne de raccordement.

7. Système de turbines selon la revendication 2, **caractérisé en ce que** l'angle entre les deux pales (306, 307) du répartiteur de vent (305) en forme de V est ajustable et/ou **en ce que** la surface des pales du répartiteur de vent en forme de V est ajustable.

8. Système de turbines selon la revendication 2, **caractérisé en ce que** les pales sont raccordées à la structure de base (310) du système de turbines via des vérins hydrauliques (308, 309) et les vérins hydrauliques peuvent aussi bien pivoter qu'être rétractables et extensibles.

9. Système de turbines selon la revendication 1, **caractérisé en ce que** des tôles d'obturation fixes (303, 311) sont prévues aux extrémités supérieure et inférieure du système de turbines et les tôles d'obturation sont biseautées (302, 312) dans la zone avant tournée vers le vent, en particulier de 20° à 30°, pour l'agrandissement de la section transversale d'ouverture du système de turbines, dans lequel les biseaux sont de préférence prévus uniquement au niveau de la zone avant des tôles d'obturation tournée vers le vent.

10. Système de turbines selon la revendication 1, **caractérisé en ce que** des tôles d'obturation fixes (303, 311) sont prévues aux extrémités supérieure et inférieure du système de turbines et les tôles d'obturation dépassent de la section transversale de rotor, en particulier de 5 %, par rapport au diamètre de rotor.
